# FASCICULE DE BREVET EUROPEEN

(11) **EP 3 529 563 B1**
(45) Date de publication et mention de la délivrance du brevet: **11.08.2021**
(21) Numéro de dépôt: 17797390.6
(22) Date de dépôt: 18.10.2017
(51) Int. Cl.: G01C 23/00, G05B 23/02, G06F 11/07

(54) **PROCÉDÉ DE GESTION D'UN SYSTÈME AUTOMATISÉ CONTRÔLÉ PAR UN OPÉRATEUR ET UN AUTOMATE, SYSTÈME AUTOMATISÉ ASSOCIÉ**
VERFAHREN ZUR VERWALTUNG EINES AUTOMATISIERTEN SYSTEMS, DAS VON EINEM BEDIENER UND EINEM AUTOMATISCHEN STEUERGERÄT GESTEUERT WIRD, ZUGEHÖRIGES AUTOMATISIERTES SYSTEM
METHOD FOR MANAGING AN AUTOMATED SYSTEM CONTROLLED BY AN OPERATOR AND AN AUTOMATIC CONTROLLER, ASSOCIATED AUTOMATED SYSTEM

(30) Priorité: 24.10.2016 FR 1660286
(43) Date de publication de la demande: 28.08.2019
(73) Titulaire: Institut Supérieur de l'Aéronautique et de l'Espace, 31055 Toulouse Cedex (FR)
(72) Inventeur: DEHAIS, Frédéric, 31500 Toulouse (FR); LABEDAN, Patrice, 32200 Escorneboeuf (FR)
(74) Mandataire: Gevers & Orès
(86) Numéro de dépôt international: PCT/FR2017/052863
(87) Numéro de publication internationale: WO 2018/078244

(56) Documents cités:
- EP-A1- 2 357 626
- EP-A1- 2 916 309
- WO-A1-2010/000960

## Description

### 1. Domaine technique de l'invention

L'invention concerne un procédé de gestion d'un système automatisé. En particulier, l'invention concerne un procédé de gestion d'un système automatisé d'un véhicule, notamment d'un aéronef.

### 2. Arrière-plan technologique

Les systèmes contrôlés par un opérateur, notamment les systèmes sensibles, c'est-à-dire qui font l'objet d'une attention renforcée pour des raisons de sécurité, tels que les véhicules (véhicule ferroviaire, terrestre ou maritime, aéronef, etc.) ou des panneaux de contrôle de centrale nucléaire par exemple, comprennent une multitude de boutons d'interaction et de voyants pour permettre l'interaction avec l'opérateur. Pour simplifier la gestion de ces systèmes par l'opérateur, une partie de cette gestion est automatisée et gérée en fonction de paramètres calculés ou mesurés par le système.

Notamment, dans le domaine aéronautique, les aéronefs disposent d'un mode dit de pilotage automatique permettant l'exécution de tâches sans nécessiter l'intervention du pilote (l'opérateur).

Toutefois, dans ces situations de gestion automatisée, un des problèmes rencontrés est de s'assurer que si le système change d'état, l'opérateur s'aperçoive de ce changement d'état. Dans le cas des aéronefs, le problème devient de plus en plus critique au vu de la complexité accrue du pilotage automatique.

En outre, si ces changements d'états peuvent être déclenchés directement par l'opérateur, auquel cas ils sont attendus par l'opérateur, ils peuvent aussi être déclenchés par une action annexe de l'opérateur qui entraine des changements de valeur de paramètres entrainant eux-mêmes un changement d'état, ou bien ils peuvent être exécutés automatiquement par le système sans action de l'opérateur.

Dans ces deux derniers cas, il est donc primordial de s'assurer que l'opérateur a bien perçu les changements d'états. Pour ce faire, des solutions ont été proposées pour effectuer un suivi du regard de l'opérateur (méthode dite d'oculométrie, ou eye-tracking en anglais), afin de s'assurer que le pilote a bien vu un élément visuel du panneau de contrôle du système indiquant le changement d'état.

Toutefois, cette solution n'est pas suffisante. En effet, lorsqu'un changement d'état est effectué alors que l'opérateur n'a pas directement provoqué ce changement d'état, il est possible que l'opérateur ne comprenne pas pourquoi le changement d'état a été effectué. Ce genre de situation peut entrainer des comportements erratiques de l'opérateur qui, voulant tenter de replacer le système dans l'état initial sans comprendre les raisons du changement d'état, ne connait pas ou se méprend sur la procédure à appliquer pour revenir à l'état initial. Ces conflits entre l'opérateur et le gestionnaire automatique peuvent dégénérer et conduire à des accidents ou incidents graves. En particulier, dans un aéronef, le pilote et le pilote automatique partageant la gestion du pilotage de l'aéronef, ces conflits peuvent entrainer des problèmes dangereux de trajectoire de l'aéronef

Le document EP 2 916 309 A1 décrit un procédé de gestion d'un système automatisé d'un aéronef comprenant un afficheur et adapté pour être contrôlé par un pilote et par au moins un automate comprenant un nombre d'états prédéterminé et un ensemble de conditions permettant de passer d'un état à l'autre, le procédé comprenant entre autres, un affichage de paramètres et d'états associés à l'automate dans différentes régions de l'afficheur et la détection, par un dispositif de suivi du regard, d'une région de l'afficheur regardée par le pilote dans un intervalle de temps prédéterminé.

Les inventeurs ont donc cherché une solution pour s'assurer de la maitrise complète de l'opérateur sur le système qu'il contrôle, même en présence d'une gestion automatique du système en parallèle qui peut effectuer des changements d'états.

### 3. Objectifs de l'invention

L'invention vise à pallier au moins certains des inconvénients des procédés de gestion et des systèmes automatisés connus.

En particulier, l'invention vise à fournir, dans au moins un mode de réalisation de l'invention, un procédé de gestion qui permet de s'assurer que l'opérateur a conscience du changement d'état du système automatisé qu'il contrôle et qu'il a une bonne compréhension du système et notamment des raisons qui ont conduit à cet état.

L'invention vise aussi à fournir, dans au moins un mode de réalisation, un procédé de gestion permettant d'alerter l'opérateur humain quand celui-ci n'a pas conscience du changement d'état du système automatisé qu'il contrôle et des raisons qui ont conduit à cet état.

L'invention vise aussi à fournir, dans au moins un mode de réalisation, un procédé et un dispositif de gestion pouvant être utilisés dans un aéronef piloté par un pilote humain et un pilote automatique.

### 4. Exposé de l'invention

Pour ce faire, l'invention concerne un procédé de gestion, selon la revendication 1, d'un système automatisé comprenant un afficheur et adapté pour être contrôlé par un opérateur humain et par au moins un automate comprenant un nombre d'états prédéterminé et un ensemble de conditions permettant de passer d'un état à l'autre, l'automate étant dans un seul état à la fois, le procédé comprenant :
- une étape de déclenchement d'une condition associée à un paramètre du système,
- une étape d'affichage dudit paramètre du système sur l'afficheur dans une première zone d'affichage de l'afficheur, dite zone de paramètre,
- une étape de changement automatique d'état de l'automate entre un premier état de l'automate et un deuxième état de l'automate suite au déclenchement de la condition,
- une étape d'affichage dudit deuxième état sur l'afficheur dans une deuxième zone d'affichage de l'afficheur, dite zone de deuxième état,
- une étape de détection, par un dispositif de suivi du regard de l'opérateur et après l'affichage du paramètre et l'affichage du deuxième état, des zones de l'affichage regardées par l'opérateur humain dans un intervalle de temps prédéterminé, dites zones regardées,
- une étape de vérification que les zones regardées comprennent au moins la zone de deuxième état et la zone de paramètre,
   et, si les zones regardées comprennent au moins la zone de deuxième état et la zone de paramètre,
- une étape de contrôle, par le dispositif de suivi du regard de l'opérateur, que l'opérateur effectue un mouvement de l'œil entre la zone de deuxième état et la zone de paramètre.

Un procédé selon l'invention permet donc, par la vérification que les zones regardées par l'opérateur humain comprennent au moins la zone d'affichage associée au deuxième état (c'est-à-dire au nouvel état dont l'opérateur doit avoir conscience) et la zone associée au paramètre lié à la condition qui a déclenché la transition vers ce deuxième état. Ainsi, outre le fait de savoir que l'opérateur humain a conscience du nouvel état (le deuxième état), le procédé permet de s'assurer que l'opérateur humain a conscience de la condition qui a provoqué ce deuxième état.

Le procédé peut bien entendu être mis en oeuvre pour plusieurs opérateurs ou plusieurs groupes d'opérateurs, de façon à vérifier qu'au moins un opérateur a conscience du nouvel état et de la condition qui a provoqué ce deuxième état. Par exemple, dans un aéronef, le pilote et le copilote forment deux opérateurs.

L'afficheur est un écran ou une pluralité d'écrans ou un ensemble de voyants lumineux ou de cadrans permettant une interaction visuelle avec l'opérateur.

La zone de paramètre et la zone de deuxième état sont déduites et sélectionnées par analyse de la correspondance entre d'une part, le paramètre ou l'état que l'on souhaite être vu par l'opérateur et d'autre part la zone d'affichage normalement prévue à l'affichage de ce paramètre ou de l'état. Cette correspondance est par exemple enregistrée sous la forme d'un tableau, d'une liste, etc. On entend par affichage du paramètre ou affichage de deuxième état, l'affichage d'un élément visuel indicateur dudit paramètre ou état. Par exemple, un compteur de vitesse pour l'affichage de la vitesse, une information lumineuse sous forme de texte ou de dessin donnant le nom de l'état en cours ou la valeur d'un paramètre, un voyant allumé ou non sur lequel est inscrit le nom de l'état ou du paramètre, etc. Bien entendu, le paramètre peut être mis en correspondance avec plusieurs zones d'affichages et l'étape de vérification vérifie que les zones regardées comprennent chaque zone de paramètre associée au paramètre.

L'étape d'affichage du paramètre du système peut être effectuée après le déclenchement (ou la réalisation) de la condition (par exemple une valeur d'un paramètre dépassant un seuil impliquera l'allumage d'un voyant lumineux), ou avant le déclenchement de la condition (par exemple si la condition est liée à un dépassement d'une certaine vitesse, la vitesse peut être un paramètre qui est déjà affiché par le système avant que la condition ne se déclenche).

Un état d'un automate est par exemple une valeur ou un ensemble de valeurs d'un ensemble de paramètres. Un automate consiste par exemple en une mémoire comprenant l'état courant et l'ensemble des états et des conditions ou transitions ou évènements permettant le passage d'un état à l'autre. Le changement automatique d'état de l'automate consiste par exemple en un changement de valeur de l'automate dans la mémoire vers le nouvel état dès qu'une condition est remplie.

La condition est associée à un paramètre par une valeur de ce paramètre (par exemple valeur d'un capteur), par un état de ce paramètre (par exemple état seuil dépassé par la valeur du paramètre, état seuil non atteint par la valeur du paramètre), par une combinaison logique de différentes valeurs ou état de paramètre, par une comparaison du paramètre à une valeur, etc. Plus généralement, la condition peut être tout type de condition connue dans un automate à état fini utilisé à des fins industrielles (de type automate programme industriel par exemple). En outre, la condition peut être liée à un autre automate distinct, par exemple si l'autre automate est dans un état particulier, la condition est validée et l'automate principal change d'état.

Bien entendu, la condition peut être validée par plusieurs paramètres affichés sur plusieurs zones de paramètre et l'étape de vérification vérifie que les zones regardées comprennent chaque zone de paramètre associées à chaque paramètre.

Avantageusement, l'étape de détection comprend un suivi du regard qui consiste notamment en un suivi du mouvement oculaire qui peut être complété par un suivi de la tête et/ou du corps de l'opérateur humain de façon à déterminer les zones de l'afficheur regardées par l'opérateur humain.

Avantageusement, l'étape de contrôle permet de valider que les zones regardées sont bien des zones distinctes et que la zone de deuxième état et la zone de paramètre ne sont pas des zones identiques.

Avantageusement, le procédé selon l'invention comprend en outre, lorsque l'étape de vérification conclut que les zones regardées ne comprennent pas au moins la zone de deuxième état et la zone de paramètre :
- une étape de création d'un message d'alerte textuel comprenant au moins un premier texte obtenu à partir du deuxième état et un deuxième texte obtenu à partir de la condition déclenchée.

Selon une première variante de l'invention, le procédé selon l'invention comprend en outre une étape d'affichage dudit message d'alerte sur l'afficheur.

Selon une deuxième variante de l'invention, le procédé selon l'invention comprend en outre une étape de synthèse vocale dudit message d'alerte textuel par un dispositif d'émission sonore.

Selon d'autres variantes de l'invention, lorsque l'étape de vérification conclut que les zones regardées ne comprennent pas au moins la zone de deuxième état et la zone de paramètre, une alerte sonore est émise, ou une combinaison entre une alerte sonore, vocale ou affichage textuel est émise.

Selon cet aspect de l'invention, cette étape permet d'alerter l'opérateur humain sur le changement d'état et de l'avertir de la condition ayant déclenché ce changement d'état. Le message d'alerte textuel est par exemple obtenu par concaténation ou combinaison des textes descriptifs. Cette étape n'est exécutée que lorsqu'il est apparent que l'opérateur humain n'a pas regardé les zones de paramètre et de deuxième état, c'est-à-dire qu'il n'est pas conscient du changement d'état ou n'est pas conscient de la condition ayant entrainé le changement d'état. Le fait d'alerter l'opérateur uniquement quand le procédé considère que le changement d'état n'est pas compris et non pas à chaque transition, permet de limiter le nombre d'alertes soumises à l'opérateur humain et de ne l'avertir qu'en cas de détection de son manque de conscience sur l'évolution des états du ou des automates.

Selon une variante de l'invention, le message textuel comprend un troisième texte obtenu à partir du premier état. L'addition au message textuel d'un texte obtenu à partir du premier état permet d'améliorer la compréhension du changement d'état.

L'invention concerne également un système automatisé, selon la revendication 5, adapté pour être contrôlé par un opérateur humain et par au moins un automate comprenant un nombre d'états prédéterminé et un ensemble de conditions permettant de passer d'un état à l'autre, l'automate étant dans un seul état à la fois, le système comprenant :
- des moyens de gestion de l'automate, adaptés pour, au déclenchement d'une condition associée à un paramètre du système, changer automatiquement l'état de l'automate entre un premier état de l'automate et un deuxième état de l'automate,
- un afficheur, adapté pour afficher le paramètre du système dans une première zone d'affichage de l'afficheur, dite zone de paramètre, et le deuxième état de l'automate dans une deuxième zone d'affichage de l'afficheur, dite zone de deuxième état,
- un dispositif de suivi du regard de l'opérateur, adapté pour détecter des zones de l'affichage regardées par l'opérateur humain dans un intervalle de temps prédéterminé, dites zones regardées,
- des moyens de vérification que les zones regardées comprennent au moins la zone de deuxième état et la zone de paramètre,
- des moyens de contrôle que l'opérateur effectue un mouvement de l'œil entre la zone de deuxième état et la zone de paramètre.

L'invention concerne également un aéronef comprenant un système automatisé selon l'invention, ledit système étant contrôlé par un pilote automatique et adapté pour être piloté par un pilote humain.

L'invention concerne également un procédé de gestion, un système automatisé et un aéronef caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique d'un afficheur de type écran d'un poste de pilotage d'aéronef,
- les figures 2, 3, 4 et 5 sont des vues schématiques d'un afficheur de type écran d'un poste de pilotage d'aéronef et d'un diagramme état-transition pendant la mise en oeuvre d'un procédé selon un mode de réalisation de l'invention,
- la figure 6 représente un procédé de gestion selon un mode de réalisation de l'invention.

### 6. Description détaillée d'un mode de réalisation de l'invention

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations. Sur les figures, les échelles et les proportions ne sont pas strictement respectées et ce, à des fins d'illustration et de clarté.

Les modes de réalisation représentés dans cette description sont relatifs à la mise en œuvre du procédé et du dispositif de gestion d'un aéronef (en particulier un avion) contrôlé par un pilote. Toutefois, le procédé et le dispositif de gestion peuvent être mise en oeuvre dans tout type de système contrôlé par un opérateur humain et au moins en partie par un automate et permettant des interactions avec l'opérateur par le biais d'éléments visuels sur un afficheur.

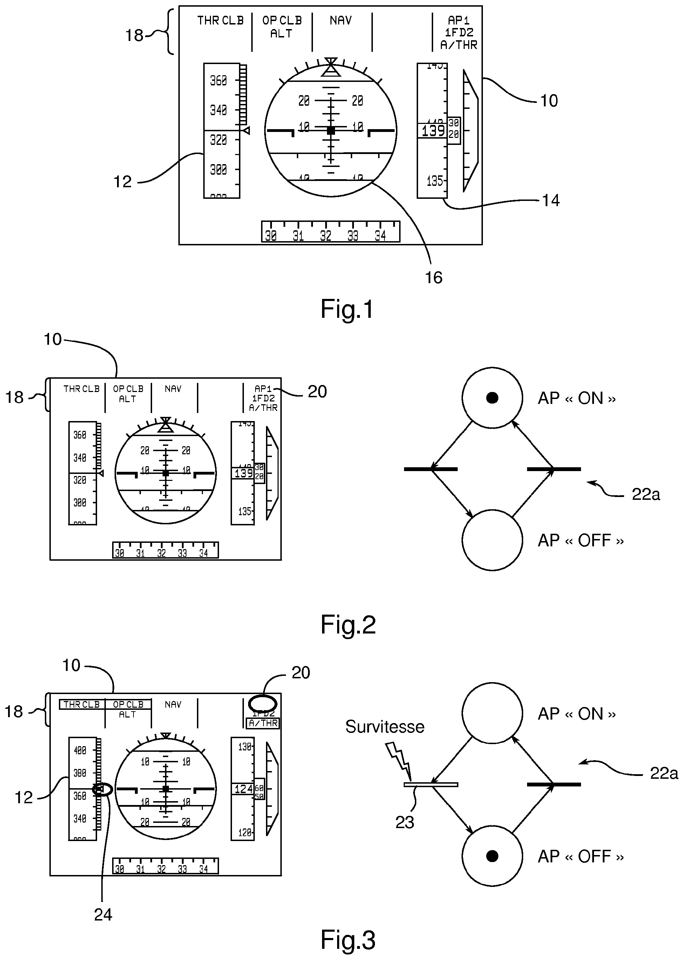

La figure 1 est une représentation schématique d'un afficheur 10 d'un système contrôlé par un opérateur humain et par au moins un automate. En particulier, l'afficheur 10 est un écran installé dans un avion piloté par un pilote humain et un pilote automatique gérant plusieurs automates chacun dans un seul état à la fois.

L'afficheur 10 permet d'afficher plusieurs éléments, notamment la vitesse, via un compteur 12 de vitesse, l'altitude, via un altimètre 14, l'assiette, via un horizon 16 artificiel, ainsi que les états des différents automates gérés par le pilote automatique dans une interface graphique appelée FMA 18 pour (*Flight Mode Annunciator* en anglais).

Le FMA 18, dans ce mode de réalisation, comprend diverses informations, réparties dans différentes colonnes, ici de gauche à droite :
- les modes de poussées de l'avion, par exemple ici « THR CLB » pour *thrust climb* en anglais, signifiant l'état « poussée de montée »,
- les modes verticaux, par exemple ici « OP CLB » pour *open climb* en anglais, signifiant l'état « en montée rapide»,
- les modes horizontaux, par exemple ici « NAV » pour *navigation* en anglais, signifiant l'état dans lequel l'aéronef suit le plan de vol,
- l'état du pilotage automatique dans la dernière colonne, par exemple ici « AP1 » pour *AutoPilot* en anglais, signifiant que le pilotage automatique est activé.

Dans ce mode de réalisation, les informations affichées sont réunies au sein d'un seul écran, mais selon d'autres modes de réalisation de l'invention, l'afficheur comprend plusieurs écrans, cadrans ou voyants permettant d'afficher les informations à destination du pilote. En particulier, le compteur de vitesse, l'altimètre, l'horizon artificiel et le FMA peuvent être disposés dans des écrans ou cadrans différents selon les aéronefs.

Les figures 2, 3, 4 et 5 sont chacune une vue schématique d'un afficheur et d'un diagramme état-transition représentatif d'un automate durant différentes phases du procédé de gestion selon un mode de réalisation de l'invention.

Les figures 2 et 3 présentent un premier exemple. La situation de l'aéronef décrite dans la figure 2 est une situation dans laquelle le pilotage automatique est activé, comme indiqué par la présence d'un texte « AP1 » dans une zone 20 d'affichage du FMA 18 de l'afficheur 10. Le pilotage automatique activé correspond à un état d'un automate 22 comprenant ici deux états, un premier état AP « ON » dans lequel le pilotage automatique est activé, et un deuxième état AP « OFF » dans lequel le pilotage automatique est désactivé. Dans la situation représentée figure 2, l'automate est dans l'état AP « ON ».

La figure 3 décrit une situation dans laquelle l'aéronef est en survitesse.

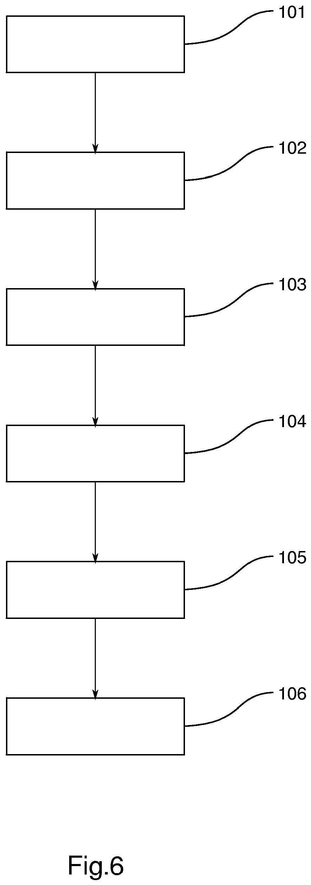

Cette survitesse va initier un procédé de gestion selon un mode de réalisation de l'invention, tel que représenté par la figure 6. Selon une première étape 101 de déclenchement, la survitesse va déclencher une condition 23 associée à l'automate. La survitesse est liée au paramètre de vitesse de l'aéronef qui est affichée dans une deuxième étape 102 d'affichage par l'afficheur 10 dans la zone d'affichage liée au compteur de vitesse 12. Selon un autre mode de réalisation, le paramètre « survitesse » peut être affiché indépendamment de la vitesse, par exemple à l'aide d'un voyant spécifique.

L'automate 22, par déclenchement de la condition 23 associée à une survitesse de l'aéronef, va passer dans une troisième étape 103 de changement automatique d'état, du premier état AP « ON » au deuxième état AP « OFF ». Ce changement d'état est affiché dans une quatrième étape 104 d'affichage dans l'afficheur 10 via notamment l'absence de texte « AP1 » dans la zone 20 d'affichage, qui était présent dans la situation précédente représentée figure 2, indiquant ainsi le changement d'état.

Ces premières étapes sont déjà connues de l'art antérieur.

Suite au changement d'état et à l'affichage du paramètre et du deuxième état, un dispositif de suivi du regard de l'opérateur, permet dans une cinquième étape 105 de détection, de détecter des zones d'affichage regardées par l'opérateur humain dans un intervalle de temps prédéterminé, dites zones regardées. Dans une sixième étape 106 de vérification, le système vérifie que les zones regardées comprennent au moins la zone de deuxième état et la zone de paramètre.

Les zones regardées correspondent à des zones sur lesquelles le regard de l'opérateur s'est porté pendant suffisamment de temps sans interruption pour considérer que la zone est regardée. Ces critères sont connus dans l'utilisation de dispositifs de suivi du regard.

L'intervalle de temps prédéterminé correspond à un temps minimum dans lequel on souhaite que l'opérateur humain ait pris conscience du changement d'état et de la condition qui a entrainé le changement d'état (en regardant la zone de paramètre), qui peut être par exemple fixé à dix secondes.

À la suite de cet intervalle de temps prédéterminé, si la vérification indique que l'opérateur humain n'a regardé ni la zone de deuxième état ni la zone de paramètre, ou a regardé la zone de deuxième état mais pas la zone de paramètre, on peut considérer qu'il n'a pas compris les raisons du changement d'état. Ainsi, le procédé peut comprendre une étape supplémentaire dans laquelle un message d'alerte textuel est créé comprenant au moins des informations sur le premier état, le deuxième état et la condition qui a déclenché le passage d'un état à l'autre. Par exemple, dans le cas présenté, le message peut prendre la forme : « Le pilote automatique a changé de l'état AP « ON » (information du premier état) à l'état AP « OFF » (information du deuxième état) parce que survitesse (information de condition) ».

Avant d'afficher ce message, le procédé peut effectuer des analyses complémentaires permettant de renforcer les présomptions que l'opérateur humain ne comprend pas le comportement du pilote automatique.

Notamment, une première analyse peut être une analyse de la balistique de l'œil, permettant de décomposer le comportement oculaire de l'opérateur pour en caractériser les états attentionnels dégradés. La mesure de l'activité oculaire permet de déceler les altérations de l'attention en différenciant les phases entre attention et vision. À titre d'exemple simplifié dans le but pour fixer les idées, on peut calculer le rapport entre le temps d'exploration (mouvements saccadiques de l'œil) et le temps d'exploitation (fixation). Par extrapolation, ce rapport permet de donner une bonne indication sur la mesure de compréhension du pilote. Par exemple, s'il apparait que les temps d'exploration de l'opérateur sont supérieurs à une valeur de référence ou que les temps de fixation sont inférieurs à une autre valeur de référence, les présomptions que l'opérateur humain ne comprend pas le comportement du pilote automatique augmentent.

Une deuxième analyse permet de détecter les situations dans lesquelles :
- le changement d'état s'est produit sans action directe du pilote sur les interfaces du pilote automatique,
- les actions du pilote sur l'interface du pilote automatique sont sans effets.

Ces situations entrainent que les présomptions que l'opérateur humain ne comprend pas le comportement du pilote automatique augmentent.

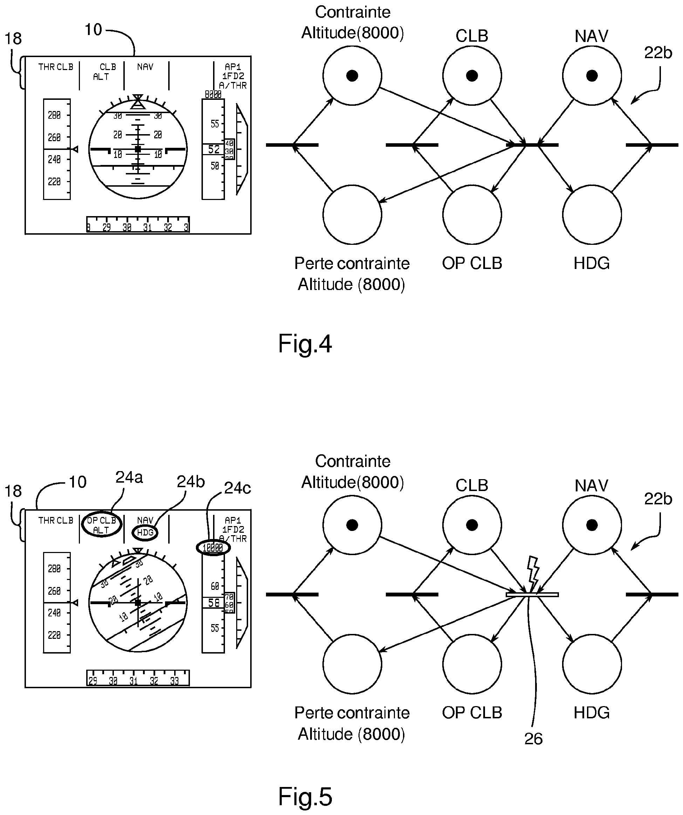

Les figures 4 et 5 présentent un deuxième exemple. La situation de l'aéronef présentée dans la figure 4 est une situation dans laquelle l'aéronef est en montée, suit sa navigation et a une contrainte d'altitude de 8000 pieds, comme indiqué respectivement par la présence d'un texte « CLB » et « NAV » dans des zones d'affichage du FMA 18 et au-dessus de l'altimètre 14 de l'afficheur 10. Le pilotage automatique activé correspond à un état de plusieurs automates 22 comprenant chacun deux états : un premier automate comprenant un premier état Contrainte Altitude dans lequel une contrainte d'altitude est fixée et un deuxième état Perte Contrainte Altitude dans lequel aucune contrainte d'altitude n'est fixée, un deuxième automate comprenant un premier état CLB dans lequel l'aéronef est en montée et un deuxième état OPCLB dans lequel l'aéronef est dans un autre mode vertical, et un troisième automate comprenant un premier état NAV dans lequel l'aéronef suit sa navigation et un deuxième état HDG (pour *heading hold* en anglais, signifiant l'état « tenue de cap ») dans lequel l'aéronef suit son cap. Dans la situation représentée figure 4, les automates sont dans l'état Contrainte Altitude, CLB et NAV.

La figure 5 représente une situation dans laquelle le pilote, pour effectuer une manoeuvre d'évitement, change le cap de l'aéronef.

Le changement de cap initié par le pilote va initier un procédé de gestion selon un mode de réalisation de l'invention, tel que représenté par la figure 6. Selon une première étape 101 de déclenchement, le changement de cap va déclencher une condition 26 associée au troisième automate entrainant le changement de l'état NAV vers l'état HDG. C'est l'objectif souhaité par l'opérateur, il n'est donc pas nécessaire de vérifier qu'il est conscient de ce seul changement d'état.

Toutefois, le changement d'état du troisième état de l'automate entraine aussi un changement d'état du deuxième automate : changement de mode vertical de l'état CLB vers l'état OPCLB. Ce changement de mode vertical entraine un changement d'état du premier automate : perte de la contrainte d'altitude entrainant une ascension de l'avion à 10000 pieds d'altitude. La condition du changement d'état du premier automate lié à l'altitude est donc un changement d'état d'un autre automate.

Ainsi, pour vérifier que l'opérateur est bien conscient de la perte de contrainte d'altitude, il faut vérifier qu'il regarde :
- la zone 24c d'affichage liée à l'altitude visée par l'aéronef (10000 pieds),
- la condition entrainant cette perte de contrainte d'altitude, qui est le changement de mode vertical dans la zone 24a d'affichage (OPCLB),
- la condition entrainant ce changement de mode vertical, qui est le passage en mode cap affiché dans la zone 24b d'affichage (HDG).

## Revendications

1. Procédé de gestion d'un système automatisé comprenant un afficheur (10) et adapté pour être contrôlé par un opérateur humain et par au moins un automate (22) comprenant un nombre d'états prédéterminé et un ensemble de conditions permettant de passer d'un état à l'autre, l'automate étant dans un seul état à la fois, le procédé comprenant :
- une étape (101) de déclenchement d'une condition (23) associée à un paramètre du système,
- une étape (102) d'affichage dudit paramètre du système sur l'afficheur dans une première zone d'affichage de l'afficheur, dite zone de paramètre,
- une étape (103) de changement automatique d'état de l'automate entre un premier état de l'automate et un deuxième état de l'automate suite au déclenchement de la condition,
- une étape (104) d'affichage dudit deuxième état sur l'afficheur dans une deuxième zone d'affichage de l'afficheur, dite zone de deuxième état,
- une étape (105) de détection, par un dispositif de suivi du regard de l'opérateur et après l'affichage du paramètre et l'affichage du deuxième état, des zones de l'affichage regardées par l'opérateur humain dans un intervalle de temps prédéterminé, dites zones regardées,
**caractérisé en ce qu'**il comprend en outre:
- une étape (106) de vérification que les zones regardées comprennent au moins la zone de deuxième état et la zone de paramètre,
et, si les zones regardées comprennent au moins la zone de deuxième état et la zone de paramètre,
- une étape de contrôle, par le dispositif de suivi du regard de l'opérateur, que l'opérateur effectue un mouvement de l'œil entre la zone de deuxième état et la zone de paramètre.

2. Procédé de gestion selon la revendication 1, **caractérisé en ce qu'**il comprend en outre, lorsque l'étape de vérification conclue que les zones regardées ne comprennent pas au moins la zone de deuxième état et la zone de paramètre :
- une étape de création d'un message d'alerte textuel comprenant au moins un premier texte obtenu à partir du deuxième état et un deuxième texte obtenu à partir de la condition déclenchée.

3. Procédé de gestion selon la revendication 2, **caractérisé en ce qu'**il comprend en outre une étape d'affichage dudit message d'alerte sur l'afficheur.

4. Procédé de gestion selon l'une des revendications 2 ou 3, **caractérisé en ce qu'**il comprend en outre une étape de synthèse vocale dudit message d'alerte textuel par un dispositif d'émission sonore.

5. Système automatisé adapté pour être contrôlé par un opérateur humain et par au moins un automate (22) comprenant un nombre d'états prédéterminé et un ensemble de conditions (23, 26) permettant de passer d'un état à l'autre, l'automate étant dans un seul état à la fois, le système comprenant :
- des moyens de gestion de l'automate, adaptés pour, au déclenchement d'une condition associée à un paramètre du système, changer automatiquement l'état de l'automate entre un premier état de l'automate et un deuxième état de l'automate,
- un afficheur, adapté pour afficher le paramètre du système dans une première zone d'affichage de l'afficheur, dite zone de paramètre, et le deuxième état de l'automate dans une deuxième zone d'affichage de l'afficheur, dite zone de deuxième état,
- un dispositif de suivi du regard de l'opérateur, adapté pour détecter des zones de l'affichage regardées par l'opérateur humain dans un intervalle de temps prédéterminé, dites zones regardées,
- des moyens de vérification configurés pour vérifier que les zones regardées comprennent au moins la zone de deuxième état et la zone de paramètre,
- des moyens de contrôle configurés pour contrôler, dans le cas où les zones regardées comprennent au moins la zone de deuxième état et la zone de paramètre, que l'opérateur effectue un mouvement de l'œil entre la zone de deuxième état et la zone de paramètre.

6. Aéronef comprenant un système automatisé selon la revendication 5, ledit système étant contrôlé par un pilote automatique et adapté pour être piloté par un pilote humain.

## Patentansprüche

1. Verfahren zur Verwaltung eines automatisierten Systems, das einen Anzeiger (10) umfasst und angepasst ist, um von einem menschlichen Bediener oder von mindestens einem Automaten (22) gesteuert zu werden, das eine Anzahl vorbestimmter Zustände und eine Einheit von Bedingungen umfasst, die es erlauben, von einem Zustand zu dem anderen überzugehen, wobei der Automat jeweils in einem einzigen Zustand ist, wobei das Verfahren umfasst:
- einen Schritt (101) des Auslösens einer Bedingung (23), die mit einem Parameter des Systems assoziiert ist,
- einen Schritt (102) des Anzeigens des Parameters des Systems auf dem Anzeiger in einer ersten Anzeigezone des Anzeigers, Parameterzone genannt,
- einen Schritt (103) des automatischen Zustandsäderns des Automaten zwischen einem ersten Zustand des Automaten und einem zweiten Zustand des Automaten infolge der Auslösung der Bedingung,
- einen Schritt (104) des Anzeigens des zweiten Zustands auf dem Anzeiger in einer zweiten Anzeigezone des Anzeigers, Zone des zweiten Zustands genannt,
- einen Schritt (105) des Erfassens, durch eine Überwachungsvorrichtung des Blicks des Bedieners und nach dem Anzeigen des Parameters und dem Anzeigen des zweiten Zustands, der Anzeigezonen, die von dem menschlichen Bediener in einem vorbestimmten Zeitraum betrachtet werden, betrachtete Zonen genannt,
**dadurch gekennzeichnet, dass** es weiter umfasst:
- einen Schritt (106) des Überprüfens, dass die betrachteten Zonen mindestens die Zone des zweiten Zustands und die Parameterzone umfassen,
und, falls die betrachteten Zonen mindestens die Zone des zweiten Zustands und die Parameterzone umfassen,
- einen Schritt zum Kontrollieren durch die Überwachungsvorrichtung des Blicks des Bedieners, dass der Bediener eine Bewegung des Auges zwischen der Zone des zweiten Zustands und der Parameterzone ausführt.

2. Verwaltungsverfahren nach Anspruch 1, **dadurch gekennzeichnet, dass** es weiter umfasst, wenn der Überprüfungsschritt schließt, dass die betrachteten Zonen nicht mindestens die Zone des zweiten Zustands und die Parameterzone umfassen:
- einen Schritt des Schaffens einer Textwarnmeldung, die mindestens einen ersten Text, der ausgehend von dem zweiten Zustand erhalten wird, und einen zweiten Text, der ausgehend von der ausgelösten Bedingung erhalten wird, umfasst.

3. Verwaltungsverfahren nach Anspruch 2, **dadurch gekennzeichnet, dass** es außerdem einen Schritt des Anzeigens der Warnmeldung auf dem Anzeiger umfasst.

4. Verwaltungsverfahren nach einem der Ansprüche 2 oder 3, **dadurch gekennzeichnet, dass** es weiter einen Sprachsyntheseschritt der Textwarnmeldung durch eine Schallemissionsvorrichtung umfasst.

5. Automatisiertes System, das angepasst ist, um von einem menschlichen Bediener und von mindestens einem Automaten (22) gesteuert zu werden, das eine Anzahl vorbestimmter Zustände und eine Einheit von Bedingungen (23, 26) umfasst, die es erlauben, von einem Zustand zu dem anderen überzugehen, wobei der Automat jeweils in einem einzigen Zustand ist, wobei das System umfasst:
- Mittel zum Verwalten des Automaten, die angepasst sind, um beim Auslösen einer Bedingung, die mit einem Parameter des Systems assoziiert ist, automatisch den Zustand des Automaten zwischen einem ersten Zustand des Automaten und einem zweiten Zustand des Automaten zu ändern,
- einen Anzeiger, der angepasst ist, um den Parameter des Systems in einer ersten Anzeigezone des Anzeigers, Parameterzone genannt, und den zweiten Zustand des Automaten in einer zweiten Anzeigezone des Anzeigers, Zone des zweiten Zustands genannt, anzuzeigen,
- eine Überwachungsvorrichtung des Blicks des Bedieners, die angepasst ist, um die von dem menschlichen Bediener betrachteten Anzeigezonen, betrachtete Zonen genannt, in einem vorbestimmten Zeitraum zu erfassen,
- Überprüfungsmittel, die konfiguriert sind, um zu überprüfen, dass die betrachteten Zonen mindestens die Zone des zweiten Zustands und die Parameterzone umfassen,
- Kontrollmittel, die konfiguriert sind, um in dem Fall, dass die betrachteten Zonen mindestens die Zone des zweiten Zustands und die Parameterzone umfassen, zu kontrollieren, dass der Bediener eine Bewegung des Auges zwischen der Zone des zweiten Zustands und der Parameterzone ausführt.

6. Luftfahrzeug, das ein automatisiertes System nach Anspruch 5 umfasst, wobei das System von einem Autopiloten gesteuert wird und angepasst ist, um von einem menschlichen Piloten geführt zu werden.

## Claims

1. A method for managing an automated system comprising a display and adapted to be controlled by a human operator and by at least one automatic controller comprising a predetermined number of states and a set of conditions allowing to switch from one state to another, the automatic controller being in only one state at a time, the method comprising:
- a step (101) of triggering a condition associated with a parameter of the system,
- a step (102) of displaying said parameter of the system on the display in a first display zone of the display, called the parameter zone,
- a step (103) of automatic change of state of the automatic controller between a first state of the automatic controller and a second state of the automatic controller subsequent to the triggering of the condition,
- a step (104) of displaying said second state on the display in a second display zone of the display, called second state zone,
- a step (105) of detecting, by an operator's gaze tracking device and after the display of the parameter and the display of the second state, the zones of the display that are looked at by the human operator within a predetermined time interval, called the zones looked at,
**characterized in that** it further comprises:
- a step (106) of verifying that the zones looked at comprise at least the second state zone and the parameter zone,
and, if the zones looked at comprise at least the second state zone and the parameter zone,
- a step of controlling, by the operator's gaze tracking device, that the operator makes an eye movement between the second state zone and the parameter zone.

2. The method for managing according to claim 1, **characterized in that** it further comprises, when the step of verifying concludes that the zones looked at do not comprise at least the second state zone and the parameter zone:
- a step of creating a text alert message comprising at least a first text obtained from the second state and a second text obtained from the triggered condition.

3. The method for managing according to claim 2, **characterized in that** it further comprises a step of displaying said alert message on the display.

4. The method for managing according to one of claims 2 or 3, **characterized in that** it further comprises a step of voice synthesis of said text alert message by a sound emission device.

5. An automated system adapted to be controlled by a human operator and by at least one automatic controller (22) comprising a predetermined number of states and a set of conditions (23, 26) allowing to switch from one state to another, the automatic controller being in only one state at a time, the system comprising:
- means to manage the automatic controller, adapted to automatically change the state of the automatic controller between a first automatic controller state and a second automatic controller state when a condition associated with a parameter of the system is triggered,
- a display, adapted to display the parameter of the system in a first display zone of the display, called the parameter zone, and the second state of the automatic controller in a second display zone of the display, called the second state zone,
- an operator's gaze tracking device, adapted to detect zones of the display looked at by the human operator within a predetermined time interval, called the zones looked at,
- means for verifying configured to verify that the zones looked at comprise at least the second state zone and the parameter zone,
- means for controlling configured to control, if the zones looked at comprise the second state zone and the parameter zone, that the operator makes an eye movement between the second state zone and the parameter zone.

6. An aircraft comprising an automated system according to claim 5, said system being controlled by an autopilot and adapted to be piloted by a human pilot.
